# EUROPÄISCHE PATENTSCHRIFT

(11) **EP 0 269 096 B1**
(45) Veröffentlichungstag und Bekanntmachung des Hinweises auf die Patenterteilung: **26.01.1994**
(21) Anmeldenummer: 87117416.5
(22) Anmeldetag: 25.11.1987
(51) Int. Cl.: H04M 1/04, H04M 1/72

(54) **Wannenförmige Aufnahme für ein schnurloses Telefon**
Support with a hollow shape for a cordless telephone
Support en forme de cuvette pour téléphone sans cordon

(30) Priorität: 28.11.1986 DE 8631885 U
(43) Veröffentlichungstag der Anmeldung: 01.06.1988
(73) Patentinhaber: SIEMENS AKTIENGESELLSCHAFT, 80333 München (DE)
(72) Erfinder: Schön, Siegfried, D-8130 Starnberg (DE)

(56) Entgegenhaltungen:
- EP-A- 0 119 602
- US-A- 4 395 591
- PATENT ABSTRACTS OF JAPAN, Band 9, Nr. 270 (E-353)[1993], 26. Oktober 1985; & JP-A-60 114 054 (TOSHIBA K.K.) 20-06-1985
- PATENT ABSTRACTS OF JAPAN, Band 9, Nr. 302 (E-362)[2025], 29. November 1985; & JP-A-60 140 963 (TOSHIBA K.K.) 25-07-1985
- PATENT ABSTRATCS OF JAPAN, Band 9, Nr. 328 (E-369)[2051], 24. Dezember 1985; & JP-A-60 160 758 (MATSUSHITA DENKI SANGYO K.K.) 22-08-1985

## Beschreibung

Die Erfindung beinhaltet eine wannenförmige Aufnahme für ein schnurloses, aufladbares Telefon mit in einer Wandung vorgesehenen und in den Wanneninnenraum hineinragenden federnden Ladekontakten.

Eine derartige ortsfest angeordnete Station mit einer den Außenkonturen des schnurlosen Telefons angepaßten wannenförmigen Aufnahme ist bereits durch die EP-A-0 119 602 bekannt. Dabei ist die wannenförmige Aufnahme bezüglich ihrer Tiefe so bemessen, daß das Telefon die Oberfläche der Station nur geringfügig überragt.

Der vorliegenden Erfindung liegt die Aufgabe zugrunde, eine Aufnahme zu schaffen, durch die das in die Aufnahme eingebrachte Telefon wahlweise als Tisch- oder Wandgerät benutzbar ist.

Diese Aufgabe wird dadurch gelöst, daß in einem Ausschnitt in der die Ladekontakte aufweisenden Wandung gegenüberliegenden Wandung ein auswechselbarer federnder Steg angeordnet ist, dessen eine Seite eine im wesentlichen glatte Oberfläche aufweist, während die andere Seite ein Rastelement besitzt.

Der in Patent-Abstracts of Japan, Band 9, Nr. 270, (E-353) (1993), 26. Oktober 1985 und JP-A-60114054 veröffentlichten Literaturstelle ist eine Fernsprechstation entnehmbar, die in zwei Gebrauchslagen (Tisch- und Wandbetrieb) verwendet werden kann. Bei einer derartigen Fernsprechstation wird die Ablagemulde für den Hörbereich des Handapparates dazu benutzt, um die zwei Gebrauchslagen mittels eines im Bereich dieser Ablagemulde einsteckbaren und für den jeweiligen Anwendungsfall benötigten Einsatzkörpers zu realisieren. Bei Verwendung der Fernsprechstation als Tischgerät wird der Einsatzkörper so eingebracht, daß dieser mit der Ablagemulde bündig abschließt, während bei Verwendung der Fernsprechstation als Wandgerät ein hakenförmiger Ansatz des Einsatzkörpers in die Ablagemulde für den Hörbereich des Handapparates hineinragt, der in eine Ausnehmung im Hörbereich des Handapparates eingreift.

Bei dieser bekannten Anordnung wird der Hörbereich des Handapparates und die ihm zugeordnete Ablagemulde unter Benutzung eines steckbaren Einsatzkörpers zur Verwendung der Fernsprechstation als Tisch- oder Wandgerät herangezogen, während bei der vorliegenden Erfindung das Problem besteht, die das Telefon in seinen Außenkonturen umfassende wannenförmige Aufnahme so zu gestalten, daß das Telefon in zwei Gebrauchslagen (Tisch- oder Wandbetrieb) verwendbar ist.

Wird bei dieser erfindungsgemäß gestalteten Anordnung der federnde Steg so in den Ausschnitt der Wandung eingebracht, daß seine glatte Oberfläche in den Wanneninnenraum weist, so läßt sich das in die Aufnahme eingebrachte Telefon als Tischgerät verwenden, während bei dem um 180° gedrehten und in den Ausschnitt eingesteckten Steg das Rastelement in den Wanneninnenraum weist, wodurch sich das in der Aufnahme befindliche Telefon als Wandgerät einsetzen läßt. Dabei drücken die federnden Ladekontakte gegen das Telefon, wodurch eine sichere Rastverbindung geschaffen und das Telefon beim Einsatz als Wandgerät sicher gehalten ist. Zu diesem Zweck können in der Rückwand der Ablage entsprechende Durchbrüche in Form von Bohrungen und/oder Langlöchern vorgesehen sein, so daß die Ablage an der Wand aufgehängt oder direkt befestigbar ist.

Vorzugsweise wird der Steg als plattenförmiger Körper gestaltet und weist Ansätze auf, die in konturmäßig entsprechende Ausnehmungen der Ablage eingreifen. Dabei kann die Verbindung der Ansätze mit den Ausnehmungen durch Rastelemente oder mit Preßsitz erfolgen.

Die Erfindungsoll im folgenden anhand eines Ausführungsbeispiels näher erläutert werden.

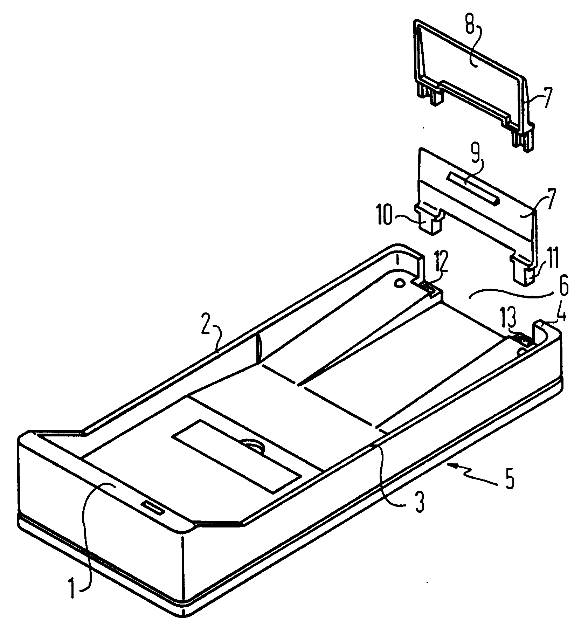

Die Ablage für ein schnurloses, aufladbares Telefon ist in der Abbildung in einer perspektivischen Ansicht dargestellt.

Das Gehäuse ist im wesentlichen wannenförmig gestaltet und den Konturen des Telefons angepaßt. Das Fernsprechgerät liegt an den inneren Wandungen 1, 2, 3 und 4 der Aufnahme 5 an. Die Wandung 1 weist in den Wanneninnenraum hineinragende, hier nicht dargestellte federnde Ladekontakte auf.

In einem Ausschnitt 6 der Wandung 4 ist ein auswechselbarer federnder Steg 7 steckbar angeordnet. Dieser als plattenförmiger Körper gestaltete Steg 7 besitzt - wie er in seiner in der Abbildung oben befindlichen Position dargestellt ist - eine zum Wanneninnenraum weisende relativ glatte Oberfläche 8, während der Steg in der um 180° gedrehten Lage (darunter gezeigte Position) ein als Nase 9 ausgebildetes Rastelement besitzt. Weiterhin besitzt der Steg 7 Ansätze 10 und 11 U-förmigen Querschnitts, die in konturmäßig entsprechende Ausnehmungen 12 und 13 der Aufnahme 5 einsteckbar sind. Die Verbindung der Ansätze mit den Ausnehmungen 12 und 13 kann durch Rastelemente oder mittels Preßsitz erfolgen.

Durch den Steg 7 kann das in die Aufnahme eingebrachte Telefon wahlweise als Tisch- oder Wandgerät verwendet werden. Bei Verwendung als Tischgerät wird der Steg so in den Ausschnitt 6 der Wandung 4 eingesteckt, daß die glatte Oberfläche zum Wanneninnenraum weist, während bei Verwendung als Wandgerät der Steg 7 in der Weise eingebracht ist, daß die als Rastelement dienende Nase 9 in den Wanneninnenraum zeigt. In der letztgenannten Position drücken die federnd gestalteten Ladekontakte gegen das Telefon, so daß ein sicherer Halt des Telefons gewährleistet ist.

## Patentansprüche

1. Wannenförmige Aufnahme (5) für ein schnurloses, aufladbares Telefon mit in einer Wandung (1) vorgesehenen und in den Wanneninnenraum hineinragenden federnden Ladekontakten, **dadurch gekennzeichnet,** daß in einem Ausschnitt (6) der die Ladekontakte aufweisenden Wandung (1) gegenüberliegenden Wandung (4) der Aufnahme (5) ein auswechselbarer federnder Steg (7) angeordnet ist, dessen eine Seite eine im wesentlichen glatte Oberfläche (8) aufweist, während die parallel dazu verlaufende andere Seite ein Rastelement (9) besitzt.

2. Wannenförmige Aufnahme nach Anspruch 1, **dadurch gekennzeichnet,** daß der Steg (7) als plattenförmiger Körper ausgebildet ist und Ansätze (10, 11) aufweist, die in konturmäßig entsprechende Ausnehmungen (12, 13) der Aufnahme (5) eingreifen.

3. Wannenförmige Aufnahme nach Anspruch 1, **dadurch gekennzeichnet,** daß das Rastelement (7) als Nase ausgebildet ist.

## Claims

1. Trough-shaped holder (5) for a cordless rechargeable telephone having sprung charging contacts which are provided in a wall (1) and project into the trough interior, characterised in that a replaceable sprung web (7) is arranged in a section (6) of the wall (4) of the holder (5) opposite the wall (1) having the charging contacts, one side of which web (7) has an essentially smooth surface (8), while the other side, which runs parallel thereto, has a latching element (9).

2. Trough-shaped holder according to Claim 1, characterised in that the web (7) is constructed as a board-shaped body and has attachments (10, 11) which engage in recesses (12, 13), which correspond in terms of contour, in the holder (5).

3. Trough-shaped holder according to Claim 1, characterised in that the latching element (7) is constructed as a tab.

## Revendications

1. Support en forme de cuvette (5) pour un téléphone sans fil rechargeable, comportant des contacts élastiques de charge prévus dans une paroi (1) et pénétrant dans l'intérieur de la cuvette, caractérisé par le fait que dans une découpe (6) de la paroi (4) du support (5), qui est située à l'opposé de la paroi (1) comportant les contacts de charge, est disposée une barrette élastique interchangeable (7), dont une face possède une surface sensiblement lisse (8), tandis que l'autre face, qui est parallèle à la précédente, possède un élément d'encliquetage (9).

2. Support en forme de cuvette suivant la revendication 1, caractérisé par le fait que la barrette (7) est constituée sous la forme d'une plaque et comporte des butées (10,11), qui pénètrent dans des évidements (12,13), de contour conjugué, du support (5).

3. Support en forme de cuvette suivant la revendication 1, caractérisé par le fait que l'élément d'encliquetage (7) est en forme de bec.
